# EUROPÄISCHE PATENTANMELDUNG

(11) **EP 1 643 333 A1**
(43) Veröffentlichungstag der Anmeldung: **05.04.2006**
(21) Anmeldenummer: 04104800.0
(22) Anmeldetag: 30.09.2004
(51) Int. Cl.: G05D 16/02, G05D 16/06

(54) **Gasdruckregler mit Dämpfungsanschlag**

(71) Anmelder: LUXEMBOURG PATENT COMPANY S.A., 7440 Lintgen (LU)
(72) Erfinder: Schmidt, Jochen, 35083 Wetter (DE); Schneider, Vitali, 35066 Frankenberg/Eder (DE)
(74) Vertreter: Weydert, Robert

(57) **Zusammenfassung**

Der Gasdruckregler hat in dem Reglergehäuse (12) einen Dämpfungsanschlag (38) an dem sich ein an einer Reglermembran (16) befestigter Betätigungsschaft bei offenem Regler anlegt, um Schwingungen des Reglermechanismusses zu dämpfen.

## Beschreibung

Die Erfindung bezieht sich auf einen Gasdruckregler gemäss dem Oberbegriff des Anspruches 1.

Ein solcher Gasdruckregler ist im Stand der Technik bekannt und wird üblicherweise als Gasdruckminderventil in Haushaltsgasversorgungseinrichtungen eingesetzt. Bei den bekannten Gasdruckreglern dieses Typs werden des öfteren Schwingungen der beweglichen Reglerteile bei geöffnetem Regler festgestellt, die ein ratterndes Geräusch des Reglers während dem Betrieb hervorrufen bedingt durch wiederholtes Aufschlagen des Dichtkörpers auf die Reglersitzfläche. Dieses Geräusch ist störend und ausserdem wird durch die beschriebenen Schwingungen und Vibrationen die Lebensdauer des Reglers herabgesetzt. Zur Dämpfung der Schwingungen wurde schon vorgeschlagen den Reglerhebel in einer im Wesentlichen U-förmigen Gabel zu führen wodurch aber ein dauernder Reibungswiderstand bedingt ist der in allen Stellungen des Betätigungshebels wirksam ist, d.h. auch unter den Betriebsbedingungen wo eine Schwingungsdämpfung eigentlich nicht erforderlich ist.

Aufgabe der Erfindung ist es einen verbesserten Gasdruckregler der beschriebenen Bauform zu schaffen, mit einer verbesserten Schwingungsdämpfungseinrichtung, die nur unter den Betriebsbedingungen wirksam ist wo die Schwingungen hauptsächlich auftreten.

Erfindungsgemäss wird diese Aufgabe in einem Gasdruckregler der eingangs erwähnten Bauform durch die Merkmale des kennzeichnenden Teiles des Anspruches 1 gelöst.

Bei dem erfindungsgemässen Gasdruckregler ist das Reglergestänge nicht durch die Führung des Hebels in einer U-förmigen Gabel gedämpft, sondern durch Anlage bei offenem Regler des Betätigungsschaftes an dem Dämpfungsanschlag. Der Betätigungsschaft ist normalerweise nicht mit dem Dämpfungsanschlag in Berührung, sondern er legt sich infolge der durch die Gasströmung bedingten Schräg- oder Kippstellung des Schaftes nur bei offenem Regler an dem Dämpfungsanschlag an und eine Reibberührung zwischen dem Schaft und dem Dämpfungsanschlag ist dementsprechend nur in dem Betriebszustand gegeben, bei welchem die Schwingungen des Betätigungsmechanismusses hauptsächlich auftreten. Dadurch wird eine übermässige Abnützung der Reglerbauteile vermindert und die Reglergenauigkeit verbessert.

Ein oder zwei Dämpfungsanschläge in Form einer Dämpfungsrippe können vorgesehen sein. Die Dämpfungsrippe oder Rippen können einstückig an dem Reglergehäuse angeformt oder lösbar und einstellbar am Gehäuse befestigt sein. Die einstellbare Befestigung ermöglicht es eine Feinregulierung des Abstandes zwischen dem Betätigungsschaft und der Dämpfungsrippe oder Rippen bei geschlossenem Regler vorzunehmen und genau festzulegen bei welcher Stellung des Reglergestänges der Schaft in Berührung mit der Dämpfungsrippe oder Rippen kommt. Ausserdem kann eine Abnützung der Bauteile während der Lebensdauer des Reglers ausgeglichen werden.

Vorzugsweise sind auf beiden Seiten eines Reglerhebels jeweils eine Dämpfungsrippe vorgesehen, welche sich beide in einem Quer- oder seitlichem Abstand vom Reglerhebel befinden. Dabei können die zwei Rippen Teile eines U-förmigen Dämpfungselementes sein, das einstellbar am Gehäuse befestigt ist.

Um die Dämpfungswirkung noch zu verstärken kann auf der Fläche der Dämpfungsrippe, die mit dem Betätigungsschaft zusammenwirkt, ein Friktionsbelag aus Gummi ode einem anderen Werkstoff mit hohem Reibungswiderstand vorgesehen sein. Das Reglergehäuse und der Betätigungsschaft sowie auch der Hebel sind vorzugsweise aus Zinkdruckguss (Zamac) gefertigt, ein bekannter Werkstoff aus dem auch Vergaserbauteile bestehen.

Am Reglerhebel kann auch ein Flügel vorgesehen sein, der unter dem Einfluss der Gasströmung den Reglerhebel in Offenstellung drückt, um einen höheren Gasdurchfluss zu erreichen.

Ein Gasdruckregler gemäss dem Stand der Technik hat üblicherweise nur einen Gasauslass, zum Anschluss des Reglers an eine Verbraucherzufuhrleitung. Zum Entlüften der Gasanlage und auch zum Feststellen ob die Anlage gasdicht ist, musste bisher der Regler von der Versorgungsleitung getrennt werden zum Anschluss von Entlüftungsgeräten oder Gasdruckprüfgeräten. Um diesen Nachteil zu vermeiden hat das Reglergehäuse des Gasdruckreglers vorzugsweise zwei Auslässe, die in einem Winkel von z.B. 90° in Bezug aufeinander angeordnet sind und von denen ein erster Auslass vorzugsweise koaxial mit dem Gaseinlass angeordnet ist. Einer dieser Auslässe ist an die Zufuhrleitung anzuschliessen und der andere Auslass ist normalerweise durch einen Stopfen verschlossen, welcher eine Anschlussmöglichkeit für ein Druckprüfgerät, wie z.B. einen Manometer oder auch ein Entlüftungsgerät, aufweist. Die Verbraucherzufuhrleitung und der Stopfen mit dem Manometer- oder Prüfgerätanschluss können wahlweise mit dem einen oder dem anderen Gasauslass verbunden werden.

Der Gasdruckregler wird im Folgenden mit Bezug auf die beiliegenden Zeichnungen ausführlicher beschrieben. Es zeigen:
Figur 1 den Gasdruckregler gemäss der Erfindung im Vertikalschnitt;
Figur 2 den Gasdruckregler gemäss der Figur 1 längs der Linie 2-2 nach Figur 1 in einer zur Schnittebene der Figur 1 senkrecht stehenden Schnittebene;
Figur 3 den Gehäuseunterteil in Perspektive, ohne die Gehäusehaube, die Reglermembran und die Reglerfedern.
die Figuren 4A, 4B, 4C und 4D die Zusammenwirkung des Betätigungsschaftes mit den Dämpfungsrippen;
die Figuren 5A, 5B und 5C ein anderes Ausführungsbeispiel des Reglers mit einstellbarem Dämpfungselement und
die Figuren 6A, 6B, 6C und 6D das Reglergestänge mit einem Flügel am Reglerhebel.

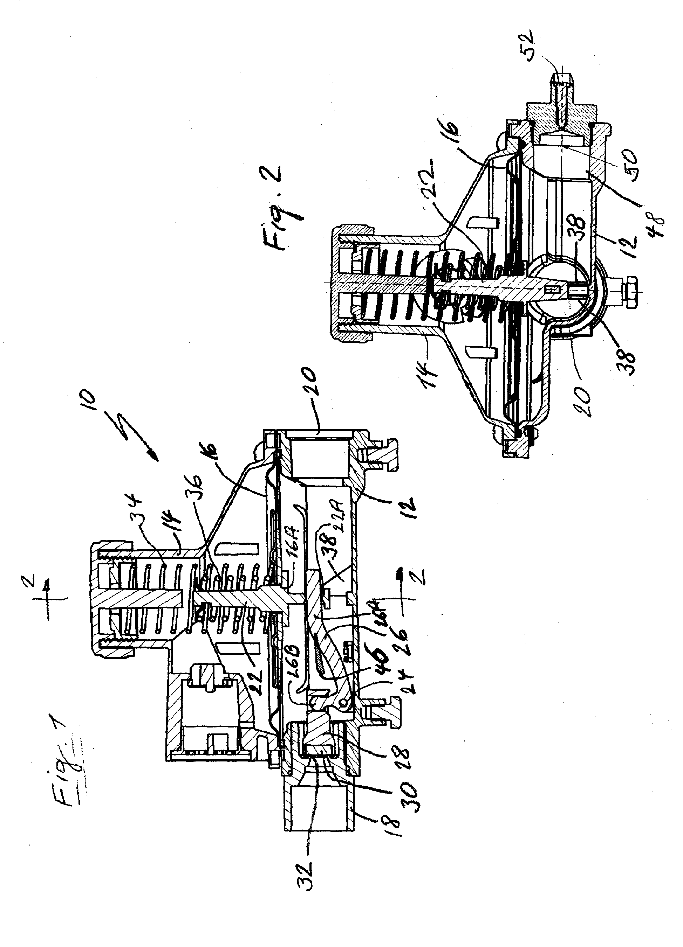

Der in Figur 1 gezeigte Gasdruckregler 10 hat ein Gehäuse mit einem Gehäuseunterteil 12 und einer Haube 14. Eine Membran 16 ist zwischen dem Gehäuseunterteil 12 und der Haube 14 dicht eingeklemmt . Das Gehäuseunterteil 12 hat eine Einlassöffnung, in die ein Einlassnippel 18 eingeschraubt ist. Diametral gegenüberliegend zum Einlassnippel 18 ist eine Auslassöffnung 20, an die eine Verbraucherzufuhrleitung (nicht dargestellt) anzuschliessen ist.

Der Regler 10 hat ein Reglergestänge bestehend aus einem Betätigungsschaft 22, der in einer mittleren Durchgangsöffnung 16A der Membran 16 aufgenommen und an der Membran 16 befestigt ist, einem bei 24 an dem Gehäuseunterteil 12 drehbar gelagerten Hebel 26 und einem Kolben 28 mit einer Dichtung 30, die in der geschlossenen Stellung des Reglers an einem Sitz 32 des Einlassnippels anliegt. Der Betätigungsschaft 22 hat einen unteren Teil, der sich unterhalb der Membran 16 befindet und einen oberen Teil, der durch die Membran in die Reglerhaube 14 ragt. In der Reglerhaube 14 oberhalb der Membran 16 befinden sich Reglerfedern 34 und 36. Ein langer Arm 26a des Hebels 26 ist in einer Durchgangsöffnung 22A des unteren Teiles des Schaftes 22 aufgenommen und ein kurzer Arm 26b des Hebels 26 ist in einer Querbohrung des Kolbens 28 gleitend geführt. Die Durchgangsöffnung des Hebels 26 hat oben und unten eine Lagerkante, um eine Linienberührung zwischen dem Schaft 22 und dem Hebel 26 zu erreichen und den Reibungswiderstand herabzusetzen.

Ein Gasdruckregler mit diesen Merkmalen ist im Stand der Technik allgemein bekannt und braucht hier nicht ausführlicher beschrieben zu werden. In Ruhestellung ist der Regler 10 vollständig geöffnet, d.h. die Membran 16 ist durch die Federn 34 und 36 nach unten gedrückt, der Hebel 26 ist gegenüber der Stellung nach Figur 1 im Uhrzeigersinn verschwenkt, d.h. der lange Hebelarm 26a ist durch den Schaft 22 auch nach unten gedrückt und der Kolben 28 ist durch den kurzen Hebelarm 26b nach rechts verschoben. Die Dichtung 30 ist von dem Sitz 32 wegbewegt und die Gasströmung kann vom Einlassnippel 18 durch den Regler 10 zum Auslass 20 strömen. Wenn der die Unterseite der Membran 16 beaufschlagende Gasdruck ansteigt bewegt sich die Membran 16 mit dem Betätigungsschaft 22 nach oben, wodurch der Hebel 26 im Gegenuhrzeigersinn verschwenkt wird und der Kolben 28 mit dem Dichtring 30 in Richtung zu dem Sitz 32 verstellt wird. Die Bewegungsrichtung des Schaftes 22 ist im Wesentlichen senkrecht zur Bewegungsrichtung des Kolbens 28.

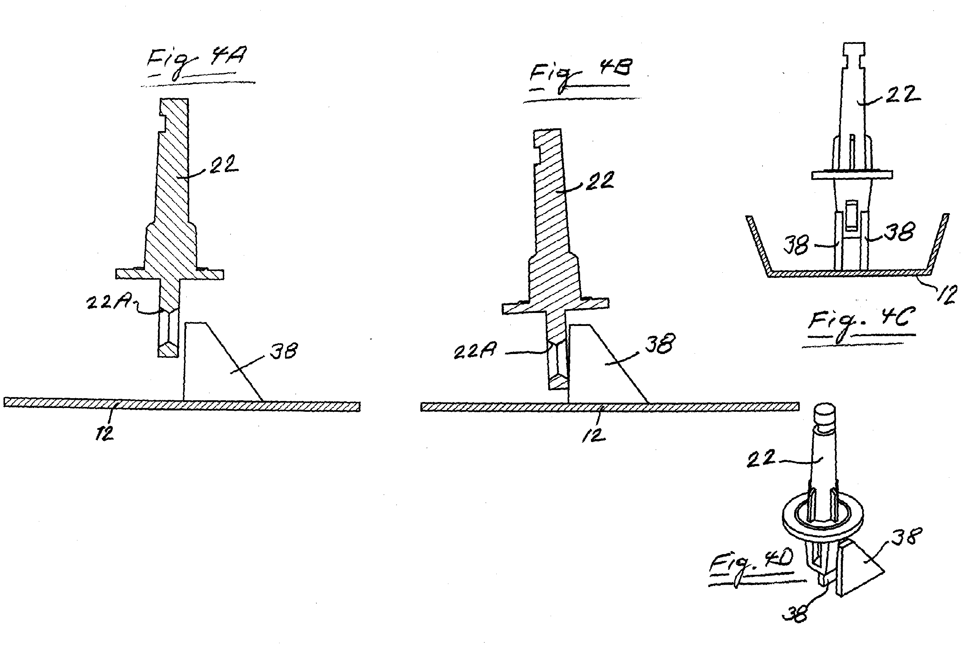

Um Schwingungen oder Geräusche zu dämpfen, die bei der offenen Reglerstellung auftreten können befinden sich (in Strömungsrichtung von dem Einlassnippel 18 zu dem Auslass 20 gesehen) hinter dem Betätigungsschaft 22 eine, vorzugsweise zwei, dünnwandige, gehäusefeste Dämpfungsrippen, -anschläge, oder -widerlager 38, an welchen der Schaft 22 bei geöffnetem Regler anliegt, wie die Figur 4B zeigt. In der Figur 4B ist der Schaft 22 unter dem Einfluss der Gasströmung gegen die Dämpfungsrippen 38 gekippt und liegt mit seinem unteren Ende an diesen an. Die Schwingungen oder Vibrationen werden dabei durch Reibung zwischen dem Schaft 22 und den Rippen 38 gedämpft. In der geschlossenen Stellung des Reglers 10 nimmt der Schaft 22 eine vertikale Lage ein und es liegt ein Freiraum oder Spalt vor zwischen dem Schaft 22 und den Rippen 38. Eine Reibung zwischen dem Schaft 22 und den Rippen 38 ist dementsprechend nur bei offenem Regler gegeben, d.h. wenn die Schwingungen gedämpft werden sollen. Die Figur 4D zeigt die zwei Rippen 38, die sich in Abstand voneinander beidseitig der Öffnung 22A in dem unteren Teil des Schaftes 22 befinden, in welcher der lange Hebelarm 26a aufgenommen ist. Die Figur 4C zeigt, dass sich die Rippen 38 in seitlichem Abstand von dem Hebelarm 26a befinden und dementsprechend nicht in Berührung mit dem Hebel 26 sind. Die Figur 4D zeigt eine perspektivische Ansicht des Schaftes 22 und der zwei Dämpfungsrippen 38.

Der Hebel 26 könnte auch ein Gabelende haben, das in zwei Öffnungen das Schaftes 22 aufgenommen ist. Eine Rippe 35 würde dann ausreichen, die bei offenem Regler zwischen diesen zwei Öffnungen am Schaft 22 anliegt.

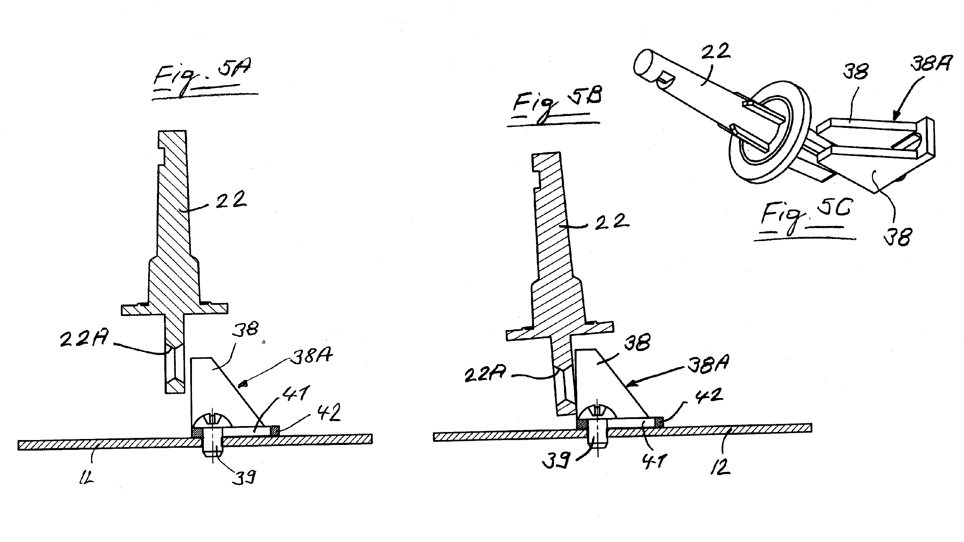

Die Rippen 38, 38 sind bei einem Ausführungsbeispiel an dem Unterteil 12 des Gehäuses angeformt, d.h. in einem Stück mit dem Gehäuseunterteil gegossen. Bei einem anderen Ausführungsbeispiel, siehe Figuren 5A, 5B und 5C ist ein Dämpfungselement einstellbar am Gehäuseunterteil 12 befestigt. Das Dämpfungselement ist ein U-Stück 38A dessen beide Schnekel die zwei Dämpfungsruppen 38 bilden. Das U-Stück 38A ist durch eine Schraube 39 an dem Gehäuseunterteil 12 befestigt. Die Schraube 39 erstreckt sich durch ein Loch 41 in dem Steg 42 des U-Stückes 38A. Wenn das Loch 41 ein Langloch ist, kann die Stellung der Rippen 38 in Bezug auf den Schaft 22 justiert werden und es können auch Reibungsabnützungen des Schaftes 22 und der Rippen 38, die während der Lebensdauer des Reglers auftreten, ausgeglichen werden.

Wie die Figuren 4A bis 4D und 5A bis 5C zeigen, sind die Rippen 38 im Wesentlichen dreieckig oder trapezförmig gestaltet und sind nach oben verjüngt. Der Schaft 22 liegt in der Offenstellung des Reglers an einer Kantenfläche 38a der Rippen 38 an, die im Wesentlichen parallel zur Schaftlängsachse verläuft, wenn diese sich in der nicht nach hinten gekippten Reglerschliesstellung befindet.

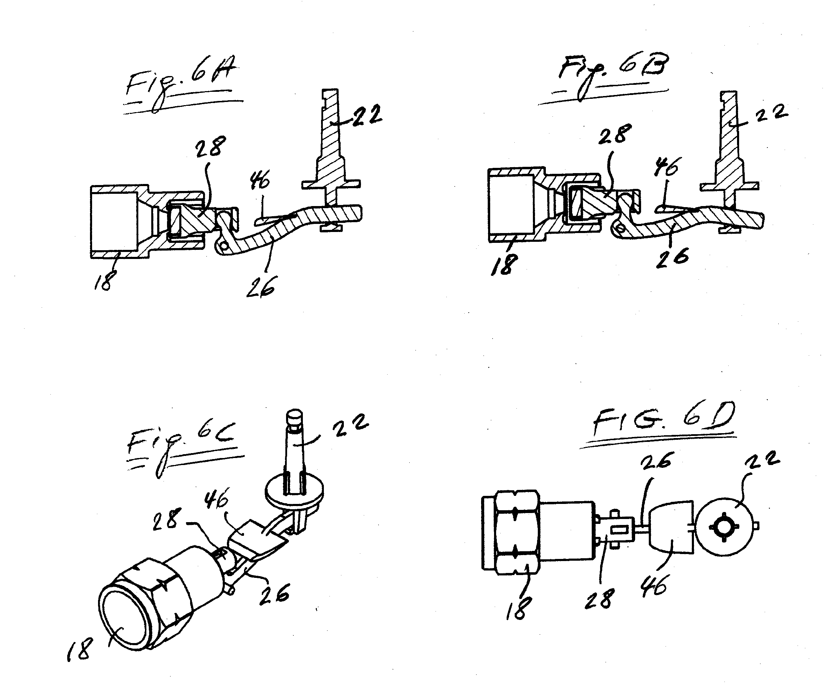

Die Figuren 6A, 6B, 6C und 6D zeigen das Reglergestänge in der geschlossenen Stellung (6A), in der offenen Stellung (6B), in Schliessstellung (6C) und in Draufsicht (6D). Ein Flügel 46 ist am Hebel 26 befestigt oder in einem Stück angeformt. Dieser Flügel 46 wird durch die Gasströmung beaufschlagt und drückt den Hebel 26 nach unten um die Öffnungsbewegung des Reglers 10 zu unterstützen. Dadurch wird der Gasdurchfluss durch den Regler verbessert.

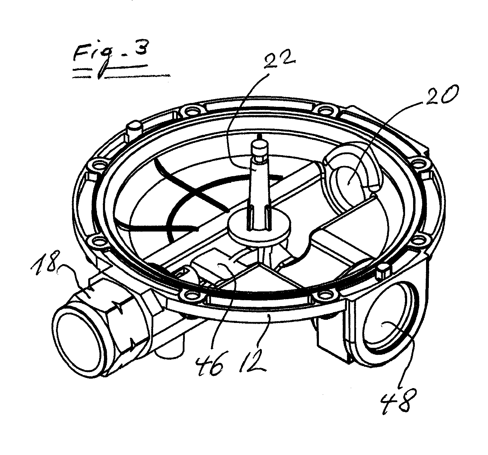

Wie in Figur 2 gezeigt hat der Gasdruckregler 10 einen zweiten Auslass 48, der gegenüber dem ersten Auslass 20 um 90° versetzt ist. Der zweite Auslass 48 ist normalerweise durch einen Stopfen 50 verschlossen, der eine Anschlussmöglichkeit für ein Hilfsgerät (nicht dargestellt) aufweist, wie z.B. ein Entlüftungsgerät oder ein Druckprüfgerät (Manometer). Die Verbraucherzufuhrleitung (nicht dargestellt) kann an den ersten Auslass 20 oder an den zweiten Auslass 48 angeschlossen werden. Falls die Verbraucherzufuhrleitung an den zweiten Auslass 48 angeschlossen werden soll braucht lediglich der Stopfen 50 aus dem Auslass 48 entfernt und in den Auslass 20 eingeschraubt zu werden. Das Ausführungsbeispiel mit den zwei Auslässen 20, 48 ergibt den Vorteil, dass zum Entlüften oder Druckprüfen der Anlage die Verbraucherzufuhrleitung nicht vom Druckregler gelöst werden muss. In dem Stopfen 50 befindet sich ein eingeschraubter Stift 52, der zum Anschluss des Hilfsgerätes zu entfernen ist. Die Figur 3 zeigt den Gehäuseunterteil 12 in Perspektive mit dem Einlassnippel 18, den beiden Auslässen 20 und 48, dem Schaft 22 und dem Hebelflügel 46.

Die Erfindung ist nicht auf die besonderen Merkmale der vorstehend beschriebenen Ausführungsbeispiele eingeschränkt und Änderungen an diesen Ausführungsbeispielen können vorgenommen werden ohne dazu den Schutzumfang der nachfolgenden Ansprüche zu verlassen.

## Patentansprüche

1. Gasdruckregler mit einem Reglergehäuse und einem in dem Reglergehäuse angeordneten Reglermechanismus mit einer federbelasteten Membran, die durch den zu regelnden Gasdruck entgegen der Federkraft einstellbar ist, einem an einer Membran befestigten Betätigungsschaft, und einem Reglerkolben, der durch den Betätigungsschaft relativ zu einer Reglersitzfläche einstellbar ist,
**dadurch gekennzeichnet, dass** am Reglergehäuse mindestens ein Dämpfungsanschlag vorgesehen ist, an welchem der Betätigungsschaft bei offenem Regler anliegt, um Schwingungen des Reglermechanismusses durch Reibberührung zwischen dem Betätigungsschaft und dem Dämpfungsanschlag zu dämpfen, und wobei bei geschlossenem Regler der Betätigungsschaft sich in einem vorbestimmten Abstand von dem Dämpfungsanschlag befindet und von diesem frei ist.

2. Regler nach Anspruch 1, **dadurch gekennzeichnet, dass** der Dämpfungsanschlag eine Dämpfungsrippe ist.

3. Regler nach Anspruch 1 oder 2, **dadurch gekennzeichnet, dass** der Dämpfungsanschlag einteilig an dem Gehäuse angeformt ist.

4. Regler nach Anspruch 1 oder 2, **dadurch gekennzeichnet, dass** der Dämpfungsanschlag lösbar am Gehäuse befestigt ist.

5. Regler nach Anspruch 1 oder 2, **dadurch gekennzeichnet, dass** der Dämpfungsanschlag einstellbar am Gehäuse befestigt ist.

6. Regler nach Anspruch 1, **dadurch gekennzeichnet, dass** ein weiterer Dämpfungsanschlag in dem Reglergehäuse vorgesehen ist, wobei der weitere Dämpfungsanschlag eine zweite Rippe ist, und die zwei Rippen quer zur Längsachse des Betätigungsschaftes und des Reglerkolbens in Abstand voneinander angeordnet sind.

7. Regler nach Anspruch 1, **dadurch gekennzeichnet, dass** der Dämpfungsanschlag ein U-förmiges Dämpfungselement mit zwei Dämpfungsrippen ist, das lösbar am Reglergehäuse befestigt ist.

8. Regler nach Anspruch 7, **dadurch gekennzeichnet, dass** das U-Stück einstellbar am Reglergehäuse befestigt ist.

9. Regler nach Anspruch 6, 7 oder 8, **dadurch gekennzeichnet, dass** der Betätigungsschaft über einen schwenkbar gelagerten Hebel wirksam mit dem Reglerkolben verbunden ist und ein Hebelarm des Hebels in einer Öffnung des Betätigungsschaftes aufgenommen ist, und dass je eine Rippe auf jeder Seite des Hebels in seitlichem Abstand von dem Hebel angeordnet ist zur Anlage bei offenem Regler an dem Betätigungsschaft auf beiden Seiten der Betätigungsschaftöffnung.

10. Regler nach Anspruch 2, 6 oder 7 **dadurch gekennzeichnet, dass** die Rippe bzw. jede Rippe eine Kantenfläche aufweist, die bei geschlossenem Regler im Wesentlichen parallel zur Schaftlängsachse ist.

11. Regler nach einem der Ansprüche 1-10, **dadurch gekennzeichnet, dass** der Dämpfungsanschlag auf seiner mit dem Betätigungsschaft zusammenwirkenden Fläche mit einem Friktionsbelag versehen ist.

12. Regler nach einem der Ansprüche 1-11, **dadurch gekennzeichnet, dass** der Betätigungsschaft über einen schwenkbar gelagerten Hebel wirksam mit dem Reglerkolben verbunden ist, und am Reglerhebel ein Flügel vorgesehen ist um den Reglerhebel durch die Gasströmung in Offenstellung zu drücken.

13. Regler nach einem der Ansprüche 1-12, **dadurch gekennzeichnet, dass** am Reglergehäuse zwei Gasauslässe vorgesehen sind, wobei wahlweise einer dieser Auslässe als Anschluss für eine Verbraucherzufuhrleitung dient und an den anderen Auslass ein Hilfsgerät, wie z.B. ein Entlüftungsgerät oder ein Druckprüfgerät anzuschliessen ist.

14. Regler nach Anspruch 13, **dadurch gekennzeichnet, dass** beide Gasauslässe in einem Winkel von etwa 90° in Bezug aufeinander angeordnet sind.

15. Regler nach Anspruch 14, **dadurch gekennzeichnet, dass** einer der Gasauslässe koaxial mit einer Gaseinlassöffnung ist und der andere Gasauslass in einem Winkel von etwa 90° in Bezug auf den ersten Gasauslass bzw. die Gaseinlassöffnung angeordnet ist.
